# EUROPEAN PATENT SPECIFICATION

(11) **EP 2 893 813 B1**
(45) Date of publication and mention of the grant of the patent: **09.11.2016**
(21) Application number: 14189735.5
(22) Date of filing: 21.10.2014
(51) Int. Cl.: A23B 7/02, A23B 7/022, A23B 7/16

(54) **METHOD FOR APPLYING A COATING TO FRUIT AND/OR VEGETABLES; COMPOSITION SUITABLE TO BE USED IN SAID METHOD AND THE USE OF SUCH COMPOSITION.**
VERFAHREN ZUM AUFBRINGEN EINER BESCHICHTUNG AUF OBST UND/ODER GEMÜSE; ZUSAMMENSETZUNG UND VERWENDUNG DIESER ZUSAMMENSETZUNG
PROCÉDÉ POUR APPLIQUER UN REVÊTEMENT À DES FRUITS ET/OU LÉGUMES ; COMPOSITION APPROPRIÉE POUR ÊTRE UTILISÉE DANS LEDIT PROCÉDÉ ET L'UTILISATION D'UNE TELLE COMPOSITION

(30) Priority: 21.10.2013 NL 2011655
(43) Date of publication of application: 15.07.2015
(73) Proprietor: De Leye Agro B.V., 3059 TS Rotterdam (NL)
(72) Inventor: Hoefnagels, Johannes Adrianus Maria, 5076 AS Haaren (NL)
(74) Representative: V.O.

(56) References cited:
- EP-A1- 1 854 360
- US-A- 3 488 200

## Description

The present invention relates to a method for applying a coating to fruit and/or vegetables. This method is preferably an industrial method, and more preferably a continuous method. In addition, the invention relates to a composition for coating fruit and/or vegetables, in particular pomes, such as apples and pears. Further, the invention relates to the use of said composition on the outer surface of pieces of vegetables and/or fruits.

More specifically, the invention is directed to coating harvested fruit and/or vegetables with a view to prolonging the life, and in particular the display life of the treated vegetable product and/or enhancing the appearance thereof. Display life is understood to mean the period during which the fruit or the vegetable is displayed for trade and, to that end, looks sufficiently attractive and preferably so as to increase consumer interest. This coating may be used on both a freshly harvested vegetable product and to such products which have been stored in cold stores or stores with a controlled atmosphere and in particular a ULO (ultra-low oxygen) controlled atmosphere (CA) for some time (for instance up to a few months even up to a year or longer).

In its most preferred embodiment, the invention relates to coating fruit and in particular apples and pears.

Suitable coatings for this purpose are known *per se.* They function by adjusting the lenticels, *i.e*. respiratory cells, in the peel or outer surface of the fruit or the vegetable such that the internal gas environment in the fruit or the vegetable delays ripening processes.

Simply presented, suitable coatings are products which block the ingress or inflow of oxygen into the fruit or the vegetable, while the outflow of carbon dioxide is mainly maintained. Blocking the inflow of oxygen does not only serve to delay the ripening processes but also brings about that aerobic organisms cause no, at least less risk of decay and prevents adverse oxidation processes; the outflow of carbon dioxide serves to prevent anaerobic fermentation.

For many, if not all, applications, the coating is to have no adverse effect on the taste, smell and color of the vegetable product to be consumed. In addition, the coating preferably remains on the vegetable product when it passes a water bath or is otherwise washed with water.

In fact, for foods, suitable oxygen-inhibiting formulations can be used, in particular formulations based on sugar esters.

An example of such life-increasing, and preferably display life-prolonging coatings comprises compositions of sucrose esters of fatty acids (EC number E473), sucroglycerides (EC number E474), carboxymethylcellulose (EC number E466) and optionally vegetable oils and/or mono/diglycerides of fatty acids (EC number E471). Fructose esters may also be suitably used in such compositions. Depending on the type of vegetable or fruit and in particular any surface layer present thereon, such as for instance a wax layer, the lipophilicity of the composition can be adjusted. A commercially available and preferred coating is sold under the trade name of Bio-Fresh™ (*ex* de Leye Agrotrade B.V. of Haaren, the Netherlands; *ex* De Leye Agro B.V. of Rotterdam, the Netherlands). BioFresh™ blocks about 85-95% of the ingress of oxygen, but keeps about 85-95% of the outflow of carbon dioxide intact.

Such life-increasing and preferably display life-prolonging and/or appearance-enhancing coatings are typically applied to the fruit or the vegetable by, piece by piece, immersing in, spraying with or covering with a solvent, for instance and preferably water, in which the coating material is dissolved, at least suspended, after which the product is dried.

In EP-A-1 854 360, NL-1031774 and in NL-2001567, the present applicant has described methods and apparatuses for applying coating material of the above-described type on fruits and/or vegetables on an industrial scale, in continuous embodiments and integrated with a conventional sorting line, where the pieces of vegetables and/or fruit are fed out on the basis of size and quality.

Such a sorting line typically consists of a water bath, in which the fruit or the vegetable is washed and transported, followed by a pre-drying belt, typically a sponge belt and/or an air-knife to be sure that a great deal of the waterfilm is removed from the fruit or the vegetable (to avoid that the water on the fruits and/or vegetables will be mixed with the coating composition, leading to a lower effective concentration in said coating composition), and a singulator for the dry fruit or the dry vegetable, comprising a sorting apparatus, where the singled fruit or the singled vegetable is selected by quality and/or by size and is packaged in boxes, crates or other containers.

More particularly, in said EP-A-1 854 360, NL-1031774 and NL-2001567 are provided an industrially applicable, preferably continuous method for applying a coating to fruit and/or vegetables, which can be integrated with a conventional sorting line, where the pieces of vegetables and/or fruit are fed out on the basis of size and/or quality, such as firmness, sugar content, color, *etc.*

Particularly, a method is described for applying a life-increasing, and preferably display life-prolonging, and/or appearance-enhancing coating to pieces of vegetables and/or fruit, in particular pomes, such as apples and/or pears, where
(a) the outer surface of the pieces of vegetables and/or fruit is moistened with a solution, with coating components therein, and
(b) the pieces of vegetables and/or fruit are dried to such an extent that they do not reach a sorting line or end up in crates or other packaging material while sticky, while drying takes place at such a temperature that the surface of the pieces of vegetables and/or fruit is not damaged by heating. The drying may take place with the aid of air or, for instance, thermal radiation. Drying with air may take place coldly, for instance at environmental temperature, although the air is then sufficiently dry or the drying time and then often also the conveyor is sufficiently long. Drying with hot air and/or force-drying with air may also take place.

The present invention aims to improve the coating applied to fruit and/or vegetables.

More in detail, it is attempted to provide a better, more complete covering of the pieces of fruit and/or vegetables. Such a better, more complete covering with the coating composition results in for example a better maintenance of the firmness of the fruits and/or vegetables, and immediately associated therewith an improved shelflife; that is, the softening of the fruits and vegetables is retarded.

Further, the coating is desirably more protective to the fruit skin, especially the skin of pears, in respect of avoiding or reducing skin damage associated with rubbing of the fruit, and especially pears, to each other or for instance to a conveyor belt.

Particularly, the present inventor has found that considerable benefits may be obtained, when the coating solution is used at a temperature in the range of 35-52°C, preferably between 35 and 50°C, especially at a temperature between 40 and 50°C; and most preferably at a temperature between 45 and 50°C.

In a first aspect, the present invention hence relates to a method for applying a life-increasing, and preferably a display life-promoting coating to pieces of vegetables and/or fruit, wherein
(a) the outer surfaces of the pieces of vegetables and/or fruit is moistened with an aqueous solution comprising carboxymethyl cellulose (E466) in combination with sucrose esters of fatty acids (E 473) and/or fructose esters of fatty acids, and
(b) the pieces of vegetables and/or fruit are dried,
characterized in that the aqueous solution comprising carboxymethyl cellulose and either sucrose esters of fatty acids or fructose esters of fatty acids has a temperature in the range of 35-70°C, preferably in the range of 35-52°C, more preferably between 35 and 50°C, especially at a temperature between 40 and 50°C, and most preferably between 45 and 50°C, when moistening the pieces of vegetables and/or fruit.

In a preferred embodiment, the pieces of fruit are pomes, and especially are apples and/or pears.

The moistening with coating may, for instance, take place with immersion, spraying, dipping, showering or drenching.

The drying step is carried out to such an extent that the pieces of fruit or vegetables do not become sticky. Moreover, the drying is carried out at such a temperature that the surface of the pieces of vegetables and/or fruit is not damaged by heating.

In this light, it is also noted that the contacting of the pieces of vegetables and/or fruit with the warmed aqueous solution should not be carried out such that the surface of the pieces of vegetable and/or fruit would be damaged. Such a damaging effect may essentially be obtained when the moistening step is carried out at the higher temperatures in the indicated range for too long a time. This upper temperature limit depends not only on the fruit or vegetable to be treated but may also not lead to decomposition of the coating composition. On the basis of tests carried out by the inventor, the temperature should not be higher than the indicated 70°C, but often is somewhat lower (as said: dependent on the fruit or vegetable that should not be damaged). For example, the moistening step should for pears not take much longer than some time over 52°C.

The skilled person working in the field of vegetable and/or fruit treating, will based on this information easily be in a position to find suitable times and other process conditions to carry out the moistening step and the drying step.

Suitable drying steps are for example described in EP-A-1 854 360, NL 1031774 and NL 2001567. In a preferred embodiment, the pieces of vegetables and/or fruits, and especially the pomes, such as apples and pears, are blown dry using air, either warm or cold air. When using cold air, that is, air of ambient temperature or colder, the direction of the stream of air is not important. When using warmer air the air current is preferably countercurrent to the direction of movement of the moisturized pieces of vegetables and/or fruit. This preferred embodiment not only is favorable to avoid damage by heating, but also provides additional drying capacity.

In a second aspect, the present invention is directed to an aqueous coating composition comprising carboxymethyl cellulose in combination with sucrose esters of fatty acids and/or fructose esters of fatty acids, characterized in that said composition has a temperature in the range of 35-70°C, preferably in the range of 35-52°C, more preferably between 35 and 50°C, and especially at a temperature between 40 and 50°C. In a preferred embodiment the weight ratio of the carboxymethyl cellulose to the esters is between 10:1 to 1:10, preferably between 2:1 to 1:6. Preferably, the coating composition of the invention is ready-for-use, and comprises 10-20 kg of the carboxymethyl cellulose and 30-50 kg of either sucrose esters of fatty acids or fructose esters of fatty acids, per 100 kg of the aqueous coating composition.

In a third embodiment, the present invention relates to the use of the coating composition of the invention to protect to the fruit skin to mechanical damage, especially the skin of pears, and preferable conference pears. In particular, the coating -when applied to the skin of fruit - avoids or reduces skin damage associated with rubbing of the fruit, and especially pears, to each other or to for instance a conveyor belt or other hard surfaces.

The present invention provides a number of advantages. Without wishing to be bound to any theory, it is assumed that because of the specific treatment temperature used, the sucrose and/or fructose esters of the fatty acids spread more even over the complete outer surface of a piece of fruit or vegetable to be treated.

The advantageous effects of the present invention make that a crop to be treated can ripen a little longer. That is, because of the prolonged shelflife riper fruits or vegetables can be shipped or otherwise transported to traders and shops, leading to products that are better tasting and hence more enjoyable to the end users, but at the same time also lead to a higher production in kg/acre for the growers.

Further, the traders also have the possibility to trade over a longer period of time, since the fruits and/or vegetables keep their firmness over a longer period of time. Similarly, supermarkets or other sellers have the possibility to purchase higher volumes, which may result in lower packaging costs, more turnover and higher profits.

Another advantage over the process described in EP-A-1 854 360, NL 1031774 and NL 2001567 is that the drying step takes less energy, because of the higher temperature of the coating composition as compared to the coating composition as used in said prior art.

It is not required that the fruits and/or vegetables to be coated come from a warehouse, and especially a cooled warehouse, for example a warehouse with a ULO-CA (ultra low oxygen - controlled atmosphere) atmosphere; although this is possible, optionally after reconditioning. The advantages of the present invention can be obtained when fruits and/or vegetables immediately or shortly after harvesting are treated with the coating composition.

The present invention will now be illustrated by the following non-limiting example.

### Example

40 Pears of the conference type (initial firmness 5.98; determined with a universal texture analyzer (LRX, Lloyd Instruments; measured twice at the equator of the pear; average of 5 pears) by measuring the maximum penetration force required for a 11 mm diameter self cutting plunger to penetrate 1 cm into the pear at a rate of 8 mm/s) were dipped for 40 seconds in an aqueous solution containing 1.2 wt.% Bio-Fresh™ (ex De Leye Agrotrade, the Netherlands; being composed of sucrose fatty esters (E473) and carboxymethyl cellulose (E466)). The aqueous solution had a temperature of 48°C (± 1°C).

In addition, 40 pears of the same charge (same firmness) were not treated, and 40 pears of the same charge were dipped for 40 seconds in the same aqueous solution but having a temperature of 18°C.

All pears, treated or untreated, were passed through a drying tunnel, wherein air of ambient temperature was used to dry all pears. The coated pears were not sticky.

Subsequently all pears were stored at 20°C, 90% relative humidity. After 2, 4, 6 and 8 days, the firmness was determined (average of 5 pears; two measurements per pear).

The results are given in the following table:

| Firmness | Initial | 2 days | 4 days | 6 days | 8 days |
|---|---|---|---|---|---|
| no treatment | 5.98 | 2.52 | 1.40 | 0.72 | 0.14 |
| 18 °C | 5.98 | 3.12 | 2.33 | 1.97 | 0.89 |
| 48 °C | 5.98 | 4.35 | 3.14 | 2.70 | 1.72 |

The above results show that the firmness is considerably increased when comparing the pears treated according to the invention (48°C) with pears treated with a reference coating (18°C) and untreated pears. The pears according to the invention were still enjoyable after 8 days storage, compared to the reference (6 days) and the untreated (3-4 days).

In addition, the pears of the invention showed a surface that was considerably less affected by the movement through the drying tunnel (the untreated pears showed a considerable amount of stripes on their skin because of rubbing the conveyor belt; and the pears treated at 18°C showed some stripes).

## Claims

1. A method for applying a life-increasing, and preferably a display life-promoting coating to pieces of vegetables and/or fruit, wherein
(a) the outer surfaces of the pieces of vegetables and/or fruit is moistened with an aqueous solution comprising carboxymethyl cellulose in combination with sucrose esters of fatty acids and/or fructose esters of fatty acids, and
(b) the pieces of vegetables and/or fruit are dried,
**characterized in that** the aqueous solution comprising carboxymethyl cellulose and either sucrose esters of fatty acids or fructose esters of fatty acids has a temperature in the range of 35-70°C, preferably in the range of 35-52°C, more preferably between 35 and 50°C, especially at a temperature between 40 and 50°C, and most preferably between 45 and 50°C, when moistening the pieces of vegetables and/or fruit.

2. The method according to claim 1, wherein the pieces of fruit are pomes, and especially apples and/or pears.

3. The method according to claim 1 or claim 2, wherein drying step (b) is carried out by blowing air.

4. The method according to any one of the preceding claims, wherein the pieces fruit and/or vegetables are coated immediately on or shortly after being harvested.

5. An aqueous coating composition comprising carboxymethyl cellulose in combination with sucrose esters of fatty acids and/or fructose esters of fatty acids, **characterized in that** said composition has a temperature in the range of 35-70°C, preferably in the range of 35-52°C, more preferably between 35 and 50°C, and especially at a temperature between 40 and 50°C.

6. The coating composition according to claim 5, wherein the weight ratio carboxymethylcellulose to the fatty acid esters is in the range of 10:1 to 1:10.

7. The coating composition according to claim 5 or claim 6, ready-for-use comprising 10-20 kg carboxymethylcellulose and 30-50 kg of either sucrose esters of fatty acids or fructose esters of fatty acids per 100 kg aqueous composition.

8. Use of the composition as defined in any of the claims 5-7 for protecting the fruit or vegetable skin to mechanical damage.

9. The use according to claim 8 for avoiding or reducing skin damage associated with rubbing of the fruits or vegetables to each other or to a conveyor belt or other hard surfaces.

10. The use according to claim 8 or claim 9, wherein the fruit is a pear, and preferable a conference pear.

## Patentansprüche

1. Verfahren zum Aufbringen einer lebensverlängernden und vorzugsweise einer die Ausstellung im Regal lebensfördernden Beschichtung auf Stücken von Gemüse und/oder Obst, wobei
(a) die Außenoberflächen der Stücke von Gemüse und/oder Obst mit einer wässrigen Lösung, umfassend Carboxymethylcellulose in Kombination mit Saccharoseestern von Fettsäuren und/oder Fructoseestern von Fettsäuren, befeuchtet werden und
(b) die Stücke von Gemüse und/oder Obst getrocknet werden,
**dadurch gekennzeichnet, dass** die wässrige Lösung, umfassend Carboxymethylcellulose und entweder Saccharoseester von Fettsäuren oder Fructoseester von Fettsäure, eine Temperatur im Bereich von 35-70°C, bevorzugt im Bereich von 35-52°C, bevorzugter zwischen 35 und 50°C, besonders bei einer Temperatur zwischen 40 und 50°C, und am meisten bevorzugt zwischen 45 und 50°C hat, wenn die Stücke von Gemüse und/oder Obst befeuchtet werden.

2. Verfahren nach Anspruch 1, wobei die Stücke von Obst Kernobst und insbesondere Äpfel und/oder Birnen sind.

3. Verfahren nach Anspruch 1 oder Anspruch 2, wobei Trocknungsschritt (b) durch Blasen von Luft ausgeführt wird.

4. Verfahren nach einem der vorhergehenden Ansprüche, wobei die Stücke Obst und/oder Gemüse sofort oder kurz nach dem Ernten beschichtet werden.

5. Wässrige Beschichtungszusammensetzung, umfassend Carboxymethylcellulose in Kombination mit Saccharoseestern von Fettsäuren und/oder Fructoseestern von Fettsäuren, **dadurch gekennzeichnet, dass** die Zusammensetzung eine Temperatur im Bereich von 35-70°C, bevorzugt im Bereich von 35-52°C, bevorzugter zwischen 35 und 50°C und insbesondere bei einer Temperatur von 40 und 50°C hat.

6. Beschichtungszusammensetzung nach Anspruch 5, wobei das Gewichtsverhältnis von Carboxymethylcellulose zu den Fettsäureestern im Bereich von 10:1 bis 1:10 liegt.

7. Beschichtungszusammensetzung nach Anspruch 5 oder Anspruch 6, gebrauchsfertig umfassend 10-20 kg Carboxymethylcellulose und 30-50 kg von entweder Saccharoseestern von Fettsäuren oder Fructoseestern von Fettsäuren pro 100 kg wässriger Zusammensetzung.

8. Verwendung der Zusammensetzung, wie in einem der Ansprüche 5-7 definiert, zum Schützen der Obst- oder Gemüsehaut gegen mechanische Beschädigung.

9. Verwendung nach Anspruch 8 zur Vermeidung oder Verminderung von Hautschädigung, verbunden mit Aneinanderreihen des Obsts oder Gemüses oder an ein Förderband oder andere harte Oberflächen.

10. Verwendung nach Anspruch 8 oder Anspruch 9, wobei das Obst eine Birne und bevorzugt eine Conference-Birne ist.

## Revendications

1. Procédé d'application d'un revêtement augmentant la durée de vie, et de préférence d'un revêtement favorisant la durée de vie d'étalage de légumes et/ou de fruits, dans lequel
(a) les surfaces externes des légumes et/ou des fruits sont humidifiées avec une solution aqueuse comprenant de la carboxyméthylcellulose en combinaison avec des esters de saccharose d'acides gras et/ou des esters de fructose d'acides gras, et
(b) les légumes et/ou les fruits sont séchés,
**caractérisé en ce que** la solution aqueuse comprenant de la carboxyméthylcellulose et des esters de saccharose d'acides gras ou des esters de fructose d'acides gras a une température comprise dans la plage allant de 35 à 70 °C, de préférence dans la plage allant de 35 à 52 °C, plus préférablement entre 35 et 50 °C, en particulier à une température comprise entre 40 et 50 °C et de manière préférée entre toutes entre 45 et 50 °C, lors de l'humidification des légumes et/ou des fruits.

2. Procédé selon la revendication 1, dans les fruits sont des fruits à pépins, et en particulier des pommes et/ou des poires.

3. Procédé selon la revendication 1 ou la revendication 2, dans lequel l'étape de séchage (b) est réalisée par soufflage d'air.

4. Procédé selon l'une quelconque des revendications précédentes, dans lequel les fruits et/ou les légumes sont enduits immédiatement lors de ou rapidement après la cueillette.

5. Composition de revêtement aqueuse comprenant de la carboxyméthylcellulose en combinaison avec des esters de saccharose d'acides gras et/ou des esters de fructose d'acides gras, **caractérisée en ce que** ladite composition a une température comprise dans la plage allant de 35 à 70 °C, de préférence dans la plage allant de 35 à 52 °C, plus préférablement entre 35 et 50 °C, et en particulier à une température comprise entre 40 et 50 °C.

6. Composition de revêtement selon la revendication 5, dans laquelle le rapport en poids de la carboxyméthylcellulose aux esters d'acide gras est compris dans la plage allant de 10:1 à 1:10.

7. Composition de revêtement selon la revendication 5 ou la revendication 6, prête à l'emploi comprenant de 10 à 20 kg de carboxyméthylcellulose et de 30 à 50 kg d'esters de saccharose d'acides gras ou d'esters de fructose d'acides gras pour 100 kg de composition aqueuse.

8. Utilisation de la composition telle que définie selon l'une quelconque des revendications 5 à 7 pour la protection de la peau de fruits ou de légumes contre le fait d'être abîmée mécaniquement.

9. Utilisation selon la revendication 8 pour éviter ou réduire le fait d'abîmer la peau associé aux frottements des fruits ou des légumes les uns contre les autres ou à un tapis transporteur ou à d'autres surfaces dures.

10. Utilisation selon la revendication 8 ou la revendication 9, dans laquelle le fruit est une poire, et de préférence une poire conférence.
